# EUROPÄISCHE PATENTSCHRIFT

(11) **EP 1 357 310 B1**
(45) Veröffentlichungstag und Bekanntmachung des Hinweises auf die Patenterteilung: **16.08.2006**
(21) Anmeldenummer: 03005383.9
(22) Anmeldetag: 13.03.2003
(51) Int. Cl.: F16D 69/02, C04B 35/573, C04B 41/51, C04B 35/80

(54) **Verbundwerkstoff mit Verstärkungsfasern aus Kohlenstoff**
Composite material with reinforcement fibers made of carbon
Matériau composite avec fibres de reinforcement en carbone

(30) Priorität: 21.03.2002 DE 10212486
(43) Veröffentlichungstag der Anmeldung: 29.10.2003
(73) Patentinhaber: AUDI AG, 85045 Ingolstadt (DE)
(72) Erfinder: Bauer, Moritz, 86153 Augsburg (DE); Christ, Martin, Dr., 86517 Wehringen (DE); Hüner, Ronald, Dr., 86674 Baar (DE); Kienzle, Andreas, Dr., 86672 Thierhaupten (DE); Zimmermann-Chopin, Rainer, Dr., 86679 Ellgau (DE)
(74) Vertreter: Deckers, Hellmuth Alexander

(56) Entgegenhaltungen:
- EP-A- 0 634 494
- EP-A- 1 084 997
- EP-A- 1 273 818
- WO-A-02/051771
- DE-A- 19 727 585
- US-A1- 2001 051 258

## Beschreibung

Die Erfindung betrifft einen Verbundwerkstoff mit Verstärkungsfasern aus Kohlenstoff. Dieser Verbundwerkstoff enthält in seiner Matrix Phasen aus Siliciumcarbid, Silicium und Kupfer und eignet sich als Reibpartner für faserverstärkte keramische Gegenkörper, insbesondere aus dem Werkstoffsystem C/SiC. Die Erfindung betrifft des weiteren Verfahren zur Herstellung dieses Verbundwerkstoffs, insbesondere durch Flüssiginfiltration von C/C-Vorkörpem durch Si- und Cu-haltige Schmelzen, sowie die Verwendung dieses Verbundwerkstoffs als Reibmaterial in Reibpaarungen mit keramischen Bremsscheiben oder Kupplungsscheiben aus C/SiC.

Bei der Suche nach geeigneten Reibmaterialien für Hochleistungsbremssysteme mit keramischen Reibkörpern stoßen die konventionellen organisch gebundenen Reibmaterialien aufgrund der auftretenden hohen Temperaturen und hohen Verschleißraten an ihre Grenzen. Dies wird insbesondere deutlich bei solchen Reibpaarungen, in denen als Bremsscheibenmaterial C/SiC oder C/C-SiC eingesetzt wird. Bei diesen Werkstoffen handelt es sich um eine im wesentlichen aus SiC und Nebenphasen aus Si und C gebildete Keramik, die mit Kohlenstoffasern verstärkt ist, wie beispielsweise in der DE-A 197 10 105 beschrieben. Bei einem Bremsvorgang treten an der Reibfläche Temperaturen um und über 1000 °C auf, dabei zersetzen sich organisch gebundene Bremsbeläge.

In der EP-A 1 079 137 wird ein Sintermetallwerkstoff für Bremsbeläge vorgeschlagen, der in Kombination mit C/C-SiC-Bremsscheiben zu erhöhter Standzeit und verbessertem Reibverhalten führt und aus einem Kupfer-Sinterwerkstoff mit einem Massenanteil von mehr als 60 % Kupfer besteht. Unter anderem durch den hohen Kupferanteil und die Binderphase ist die für keramische Reibpartner geforderte Hochtemperaturfestigkeit aber eingeschränkt.

In der DE-A 197 27 586 wird vorgeschlagen, eine Kombination aus einer C/SiC-Bremsscheibe und einem dazu korrespondierenden C/SiC-Bremsbelag zu verwenden. Der C/C-Vorkörper der Bremsscheibe weist dabei geringere Dichte auf als die oberflächennahen Bereiche des C/C-Vorkörpers des Bremsbelages. Dies führt dazu, daß nach der Flüssigsilicierung des C/C-Vorkörpers des Belages ein C/SiC mit geringerer Festigkeit gebildet wird. Insgesamt sind das Reib- und Verschleißverhalten, das Naßansprechverhalten und insbesondere das Komfortverhalten, umfassend konstante Reibwerte und niedrige Geräuschentwicklung, jedoch noch nicht befriedigend.

Gegenüber diesem Stand der Technik ist es Aufgabe der Erfindung, ein Reibmaterial bereitzustellen, das die hohen Temperaturen bei den Bremsvorgängen unbeschadet übersteht und ein verbessertes Komfortverhalten in Kombination mit keramischen Gegenkörpern zeigt. Insbesondere soll das Reibmaterial auf die Kombination mit C/SiC-Bremsscheiben abgestimmt sein.

Erfindungsgemäß wird diese Aufgabe durch einen mit Kohlenstoff-Kurz fasern verstärkten Verbundwerkstoff gelöst, dessen Matrix neben Siliciumcarbid, Silicium und gegebenenfalls Kohlenstoff noch Kupfer enthält. Dabei liegt das Kupfer in elementarer Form oder als Legierung überwiegend als Ausscheidung oder als Cu-reiche Phase innerhalb der Matrix des C/SiC-Verbundwerkstoffs vor.

Die Erfindung betrifft daher einen als Reibmaterial geeigneten Verbundwerkstoff mit Kohlenstoff-Kurzfasern als Verstärkungsfasern dessen Matrix Siliciumcarbid, Silicium und Kupfer enthält, wobei der Massenanteil von Kupfer in dem Verbundwerkstoff von 15 bis zu 55 % beträgt.

Der Verbundwerkstoff kann daneben in der Matrix noch Kohlenstoff enthalten.

Gegenüber dem Stand der Technik zeichnet sich dieses Reibmaterial dadurch aus, daß die guten Hochtemperatur- und Reibeigenschaften des C/SiC und die reibwertmodifizierenden Eigenschaften des Cu erstmals in der Weise zusammengeführt werden, daß ein homogener und hochtemperaturstabiler Werkstoff entsteht.

Bevorzugt liegt der Massenanteil von Kupfer in dem Verbundwerkstoff im Bereich von 15 bis 50 % und besonders bevorzugt im Bereich von 15 bis 45 %.

Bevorzugt ist das Kupfer in der Matrix in einzelnen kupferhaltigen Bereichen enthalten, wobei die Kupfer enthaltenden Phasen keine kontinuierliche Phase bilden, sondern die einzelnen kupferhaltigen Bereiche werden vollständig von anderen Phasen, insbesondere Siliciumcarbid-haltigen Phasen umgeben. Derartige nicht zusammenhängende kupferhaltige Bereiche werden als "diskrete Phasen" bezeichnet.

Bevorzugt beträgt der Volumenanteil an diskreten, kupferhaltigen Phasen in dem Verbundwerkstoff bis zu 25 %, bezogen auf das Volumen des Verbundwerkstoffs.

Bevorzugt enthalten die kupferhaltigen Phasen außer Kupfer weitere Metalle, die mit Kupfer Mischphasen bilden. Bevorzugt sind die Metalle Zink, Zinn, Blei und Aluminium, wobei diese einzeln oder in Mischung vorliegen können. Der Massenanteil dieser Metalle, bezogen auf die Summe der Massen von Kupfer und diesen Metallen, beträgt bis zu 25 %.

Kupfer ist als Zusatz in Bremsbelägen zur Veränderung des Reibwerts oder der Wärmeleitfähigkeit insbesondere in Kombination mit Bremsscheiben aus Grauguß oder Stahl bereits bekannt. Bei diesen Belagszusammensetzungen handelt es sich aber um organisch gebundene Beläge oder Sintermetall-Beläge, die bei Temperaturen um oder oberhalb von ca. 1000 °C zersetzt werden, wobei das Kupfer sogar schmilzt und den Belag zerstört.

Obwohl auch der erfindungsgemäße Reibbelag Kupfer in elementarer Form oder in Form von dessen Legierungen enthält, deren Schmelzpunkte bei den Anwendungstemperaturen erreicht oder überschritten werden können, findet überraschenderweise keine Zerstörung des Verbundwerkstoffes durch Aufschmelzen statt. Dies ist wahrscheinlich unter anderem auf den dem Werkstoff eigenen Gefügeaufbau zurückzuführen, bei dem das Cu in der SiC-haltigen Matrix eingebettet ist.

Neben den kupferhaltigen Phasen und Siliciumcarbid können auch noch andere Carbide in der Matrix enthalten sein. Insbesondere bevorzugt sind Carbide von Bor, Titan, Zirkon, Hafnium, Vanadium, Chrom, Molybdän, Wolfram, Eisen, Kobalt und Nickel. Weiter kann die Matrix auch Silicide der vorgenannten Elemente enthalten. Es ist weiter möglich, daß diese Elemente als metallische Phasen in der Matrix vorliegen. Bevorzugt beträgt der Massenanteil dieser Elemente und ihrer Carbide und Silicide bis zu 20 % der Masse der Matrix.

Es ist weiter bevorzugt, daß der Verbundwerkstoff vorgeformte Zuschlagstoffe enthält, die bei der Herstellung des C/C-Verbundkörpers zugesetzt werden und in dem Verbundwerkstoff separate Phasen bilden. Bevorzugt sind als Zuschlagstoffe Siliciumcarbid, Siliciumnitrid, Titancarbid, Aluminiumoxid (Korund), Zirkondioxid, Siliciumdioxid und Zirkonsilicat. Diese Zuschlagstoff werden bevorzugt in solchen Mengen eingesetzt, daß ihr Massenanteil bis zu 15 % der Masse der Matrix beträgt.

Die Erfindung betrifft weiter ein Verfahren zur Herstellung derartiger Reibmaterialien umfassend die Schritte
- Herstellung eines porösen Kohlenstoff/Kohlenstoffverbundkörpers (C/C- oder CFC-Körpers, mit Kohlenstoff - Kurz fasern verstärkter Körper, dessen Matrix im wesentlichen aus Kohlenstoff besteht und porös ist, englisch "CFRC" = carbon-fibre reinforced carbon)
- Schmelzinfiltration des porösen C/C-Körpers mit einer Metallschmelze, die Silicium und Kupfer enthält
- Reaktion zumindest eines Teils des Kohlenstoffs des C/C-Körpers mit dem Silicium der Schmelze unter Bildung von Siliciumcarbid

Die eingesetzte Metallschmelze weist neben Silicium und Kupfer im allgemeinen noch geringere Mengen, typischerweise 0,1 bis 5 % weiterer Metalle auf.

Der C/C-Körper wird dabei nach den bekannten Verfahren hergestellt, und enthält als Verstärkungsfasern bevorzugt beschichtete Kohlenstoffkurzfasern oder Faserbündel. Der C/C-Körper muß offene Poren aufweisen, die einen Zutritt der Metallschmelze ins Innere des Körpers ermöglichen. Erfindungsgemäß liegt die Porosität, gemessen als Volumenanteil der Poren an dem gesamten Volumen des Körpers, bei mindestens 10 % und bevorzugt bei mindestens 18 %. Die bevorzugte Dichte des C/C-Körpers liegt bei höchstens 1,6 g/cm³, bevorzugt im Bereich von ca. 1 bis 1,5 g/cm³.

Das erfindungsgemäße Verfahren sieht bevorzugt vor, daß der C/C-Körper bereits weitere für das Reibmaterial vorgesehene Zuschlagstoffe, insbesondere Hartstoff-Reibmittel oder Sintermetallpartikel enthält. Bevorzugt werden als Hartstoff-Reibmittel hierbei Carbide oder Oxide in Massenanteilen von bis zu ca. 15 % eingesetzt, bevorzugt bis zu 15 %, und besonders bevorzugt von 1 bis 13 %, wobei deren Schmelzpunkt vorteilhafterweise oberhalb der Schmelztemperatur von Silicium liegt. Typische Vertreter der Reibmittel sind Siliciumcarbid, Siliciumnitrid, Titancarbid, Aluminiumoxid (Korund), Zirkondioxid, Siliciumdioxid und Zirkonsilicat.

In einer weiteren vorteilhaften Ausgestaltung des erfindungsgemäßen Verfahrens wird bereits in den C/C-Körper metallisches Kupfer oder dessen Legierungen mit Massenanteilen von bis zu 25 %, bevorzugt 1 bis 20 %, und besonders bevorzugt 2 bis 15 % an anderen Metallen eingebracht, da sich hierdurch der Anteil des über die Schmelze zuzuführenden Kupfers reduzieren läßt. Dabei wird das Kupfer oder seine Legierungen bevorzugt in Form von Pulver oder Spänen eingebracht. Im Extremfall ist es sogar möglich, ganz auf die Zuführung von Kupfer über die Schmelze von außen zu verzichten, so daß zur Infiltration lediglich eine Silicium-Schmelze eingesetzt wird.

Das Einbringen von Kupfer oder Kupfer enthaltenden Legierungen erfolgt hier bevorzugt in der Weise, daß Kupferpulver oder Kupferspäne oder Pulver oder Späne aus kupferhaltigen Legierungen in einen mit Kohlenstoffasern verstärkten duroplastischen Formkörper (CFK-Körper) eingebracht werden, der bei Erhitzen unter Sauerstoffausschluß auf Temperaturen im Bereich von ca. 800 bis ca. 950 °C in bekannter Weise carbonisiert wird. Der duroplastische Formkörper enthält als carbonisierbares Material bevorzugt Polymere mit hoher Kohlenstoffausbeute wie Phenolharze, Furanharze, Epoxidharze oder Polyimide. Auch die gegebenenfalls eingesetzten Hartstoff-Reibmittel oder Sintermetallpartikel werden bevorzugt in den CFK-Körper eingebracht.

Die Schmelzinfiltration wird üblicherweise bei Temperaturen von mindestens 1450 °C bei Normal- oder reduziertem Druck, unter Schutzgas oder im Vakuum durchgeführt. Als Metallschmelzen werden Cu/Si-Schmelzen verwendet, wobei auch weitere insbesondere carbidbildende Elemente in der Schmelze enthalten sein können, die dann mitinfiltriert werden. Bevorzugt werden Bor und als weitere Metalle Ti, V, Cr, Mo, W, Fe, Co und Ni sowie Mischungen von zweien oder mehreren dieser Elemente in Massenanteilen von bis zu ca. 20 % in der Schmelze verwendet, besonders bevorzugt 1 bis 20 %, und insbesondere 2 bis 15 %. Diese Gruppe von Metallen hat insbesondere die Aufgabe, die Reaktivität des Siliciums gegenüber dem Kohlenstoff des C/C-Körpers und das Oxidationsverhalten des Reibmaterials bei hohen Anwendungstemperaturen günstig zu beeinflussen. Dabei bilden sich unter den Bedingungen der Infiltration und Reaktion Carbide und Silicide dieser Elemente, neben nicht umgesetzten Resten der Zusätze.

Die Metallschmelze wird bevorzugt über poröse Dochte aus kohlenstoffhaltigem Material und/oder über Schüttungen von Metallpartikeln zugeführt. Typischerweise wird dazu eine Mischung aus Pulver oder Granulat der einzelnen Metallkomponenten Si und Cu verwendet.

Es ist nicht notwendig, zuvor die dem gewünschten Si/Cu-Verhältnis entsprechende Si/Cu-Legierung herzustellen, denn die Si- und Cu-Pulver oder -Granulate verbinden sich bei der Temperaturbehandlung zu einer gemeinsamen Schmelze. Es kann jedoch von Vorteil sein, bereits fertige Legierungen zu verwenden, da dann im allgemeinen wesentlich geringere Temperaturen zum Aufschmelzen erforderlich sind. Hierdurch wird das Schmelzinfiltrationsverfahren technisch vereinfacht. Ein großer Vorteil der Verwendung von vorgefertigten Legierungen zur Infiltration liegt darin, daß die im allgemeinen schlecht benetzende Kupferschmelze mit Hilfe des sehr gut benetzenden Schmelze-Hauptbestandteils Silicium ohne äußeren Druck in die Kapillaren und Poren des C/C-Körpers aufgenommen wird. Dieser Vorteil wird beispielsweise beim Vergleich mit dem in der DE-A 37 31 540 vorgestellten Verfahren deutlich. Hier wird ein Reibwerkstoff aus C/C mit durch Cu gefüllten Poren hergestellt. Das Cu wird unter Druck in die kontinuierlichen Poren gepreßt. Dabei können geschlossene Poren des C/C-Körpers nicht gefüllt werden.

Auch bei der Porenfüllung zeigt das erfindungsgemäße Verfahren deutliche Vorteile, denn auf diese Weise ist es auch möglich, die geschlossenen Poren durch Schmelze zu füllen. Dies wird dadurch erreicht, daß ein Teil des Kohlenstoffs des C/C-Körpers durch die Reaktion mit Silicium verzehrt wird, wobei auch verschlossene Porenkanäle geöffnet werden können. Gemeinsam mit dem Silicium kann dann auch Kupfer in die zuvor verschlossenen Poren gelangen. Der Flüssiginfiltrationsprozeß mit kupferhaltigen Silicium-Schmelzen führt dabei zu einem typischen Gefüge mit von SiC und/oder Si umgebenen Cu-Phasen oder Ausscheidungen. Insbesondere entstehen auch Cu-Phasen oder Ausscheidungen, die nicht mehr die Oberfläche des Verbundkörpers berühren, sondern vom umgebenden C/SiC-Material eingeschlossen sind. In einer weiteren vorteilhaften Ausgestaltung der Erfindung wird statt Cu eine Cu-Legierung im Gemisch mit Silicium zur Infiltration eingesetzt. Als Legierungsbestandteile werden die Metalle Zink, Zinn, Blei und Aluminium bevorzugt, wobei deren Massenanteile bevorzugt bis zu 25 % betragen.

Der Volumenanteil an Cu-Phasen oder Cu-Legierungsphasen in dem Verbundwerkstoff beträgt bevorzugt bis zu 25 %, besonders bevorzugt bis zu 22 % und insbesondere 5 bis 20 %. Hierbei sind diejenigen Phasen gemeint, die im wesentlichen (zu mindestens 30 % ihrer Masse) aus Cu bestehen.

Bei der Infiltration des C/C-Körpers mit Silicium und der Reaktion des Kohlenstoffs mit dem Silicium zu Siliciumcarbid werden auch die Kohlenstoffasern zumindest oberflächlich angegriffen. Dabei werden die Fasern mit einer Schicht von Siliciumcarbid überzogen. Es ist bevorzugt, daß die Kohlenstoffasern auf diese Weise keine direkten Kontakt zu einer kupferhaltigen Phase haben, sondern daß die Kohlenstoffasern und die kupferhaltigen Phasen zumindest durch eine so gebildete dünne Siliciumcarbidschicht voneinander getrennt sind.

Der erfindungsgemäße Verbundwerkstoff eignet sich besonders als Reibmaterial für Reibpaarungen mit Gegenkörpern, bei denen zumindest die Reibfläche aus hartem keramischem Material gebildet wird. Er wird bevorzugt eingesetzt in Reibpaarungen mit Gegenkörpern aus kohlenstoffaserverstärkter Verbundkeramik mit SiC-haltiger Matrix und besonders bevorzugt für C/SiC-Keramik. Besonders vorteilhaft ist der erfindungsgemäße Verbundwerkstoff in Bremsbelägen für keramische Bremsscheiben, die in der dem Bremsbelag zugewandten Zone einen Massenanteil von Siliciumcarbid von mindestens 60 % aufweisen.

## Patentansprüche

1. Verbundwerkstoff mit beschichteten Kurxfasern aus Kohlenstoff als Verstärkungsfasern, wobei die Matrix des Verbundwerkstoffs Siliciumcarbid, Silicium und Kupfer enthält mit einem Massenanteil von Kupfer in dem Verbundwerkstoff von 15 % bis zu 55 %.

2. Verbundwerkstoff nach Anspruch 1, **dadurch gekennzeichnet, daß** das Kupfer in der Matrix in einzelnen kupferhaltigen Bereichen enthalten ist, wobei die einzelnen kupferhaltigen Bereiche vollständig von anderen Phasen, insbesondere Siliciumcarbid-haltigen Phasen umgeben werden.

3. Verbundwerkstoff nach Anspruch 2, **dadurch gekennzeichnet, daß** der Volumenanteil der kupferhaltigen Bereiche in dem Verbundwerkstoff bis zu 25 %, bezogen auf das Volumen des Verbundwerkstoffs, beträgt.

4. Verbundwerkstoff nach Anspruch 2 oder 3, **dadurch gekennzeichnet, daß** die kupferhaltigen Phasen außer Kupfer weitere Metalle enthalten, die mit Kupfer Mischphasen bilden, ausgewählt aus Zink, Zinn, Blei und Aluminium, wobei diese einzeln oder in Mischung vorliegen können.

5. Verbundwerkstoff nach Anspruch 4, **dadurch gekennzeichnet, daß** der Massenanteil dieser Metalle, bezogen auf die Summe der Massen von Kupfer und diesen Metallen, bis zu 25 % beträgt.

6. Verbundwerkstoff nach Anspruch 1, **dadurch gekennzeichnet, daß** die Matrix Carbide und/oder Silicide der Elemente Bor, Titan, Zirkon, Hafnium, Vanadium, Chrom, Molybdän, Wolfram, Eisen, Kobalt und Nickel und/oder diese Elemente selbst enthält.

7. Verbundwerkstoff nach Anspruch 6, **dadurch gekennzeichnet, daß** die Summe der Massenanteile dieser Elemente, ihrer Carbide und Silicide bis zu 20 % der Masse der Matrix beträgt.

8. Verbundwerkstoff nach Anspruch 1, **dadurch gekennzeichnet, daß** der Verbundwerkstoff vorgeformte Zuschlagstoffe enthält, die in dem Verbundwerkstoff separate Phasen bilden.

9. Verbundwerkstoff nach Anspruch 8, **dadurch gekennzeichnet, daß** die Zuschlagstoffe ausgewählt sind aus Siliciumcarbid, Siliciumnitrid, Titancarbid, Aluminiumoxid, Zirkondioxid, Siliciumdioxid und Zirkonsilicat.

10. Verbundwerkstoff nach Anspruch 8 oder 9, **dadurch gekennzeichnet, daß** der Massenanteil der Zuschlagstoffe bis zu 15 % der Masse der Matrix beträgt.

11. Verfahren zur Herstellung von Verbundwerkstoffen gemäß Anspruch 1, umfassend die Schritte
- Herstellung eines porösen Kohlenstoff/Kohlenstoffverbundkörpers enthaltend beschichtete Kohlenstoffasern
- Schmelzinfiltration des porösen C/C-Körpers mit einer Metallschmelze, die Silicium und Kupfer enthält
- Reaktion zumindest eines Teils des Kohlenstoffs des C/C-Körpers mit dem Silicium der Schmelze unter Bildung von Siliciumcarbid.

12. Verfahren nach Anspruch 11, **dadurch gekennzeichnet, daß** die eingesetzte Metallschmelze neben Silicium und Kupfer einem Massenanteil von 0,1 bis 5 % weiterer Metalle aufweist.

13. Verfahren nach Anspruch 11, **dadurch gekennzeichnet, daß** der C/C-Körper vor der Infiltration einen Volumenanteil der Poren an dem gesamten Volumen des Körpers von mindestens 10 % und eine Dichte von höchstens 1,6 g/cm³ aufweist.

14. Verfahren nach Anspruch 11, **dadurch gekennzeichnet, daß** der C/C-Körper vor der Infiltration bereits weitere Zuschlagstoffe ausgewählt aus Hartstoff-Reibmitteln und Sintermetallpartikeln enthält.

15. Verfahren nach Anspruch 14, **dadurch gekennzeichnet, daß** als Hartstoff-Reibmittel Carbide oder Oxide mit Schmelzpunkten oberhalb der Schmelztemperatur von Silicium in Massenanteilen von bis zu ca. 15 % eingesetzt werden.

16. Verfahren nach Anspruch 11, **dadurch gekennzeichnet, daß** bereits in den C/C-Körper metallisches Kupfer oder dessen Legierungen mit Massenanteilen von bis zu 25 % an anderen Metallen eingebracht werden.

17. Verfahren nach Anspruch 16, **dadurch gekennzeichnet, daß** das Kupfer oder seine Legierungen in Form von Pulver oder Spänen eingebracht werden.

18. Verfahren zur Herstellung von Verbundwerkstoffen gemäß Anspruch 1, umfassend die Schritte
- Herstellung eines porösen Kohlenstoff/Kohlenstoffverbundkörpers enthaltend beschichtete Kohlenstoffasern und Kupfer,
- Schmelzinfiltration des porösen C/C-Körpers mit einer Siliciumschmelze,
- Reaktion zumindest eines Teils des Kohlenstoffs des C/C-Körpers mit dem Silicium der Schmelze unter Bildung von Siliciumcarbid.

19. Verfahren nach Anspruch 11, **dadurch gekennzeichnet, daß** als Metallschmelze Cu/Si-Schmelzen verwendet werden, wobei weitere carbidbildende Elemente in der Schmelze enthalten sind, ausgewählt aus Bor, Titan, Vanadium, Chrom, Molybdän, Wolfram, Eisen, Kobalt und Nickel sowie Mischungen von zweien oder mehreren dieser Elemente in Massenanteilen von bis zu ca. 20 % in der Schmelze.

20. Verfahren nach Anspruch 11, **dadurch gekennzeichnet, daß** die Metallschmelze über poröse Dochte aus kohlenstoffhaltigem Material und/oder über Schüttungen von Metallpartikeln zugeführt wird.

21. Verfahren nach Anspruch 11, **dadurch gekennzeichnet, daß** bereits fertige Legierungen von Cu und Si zur Infiltration verwendet werden.

22. Verfahren nach Anspruch 11, **dadurch gekennzeichnet, daß** eine Cu-Legierung im Gemisch mit Silicium zur Infiltration eingesetzt wird, wobei als Legierungsbestandteile die Metalle Zink, Zinn, Blei und Aluminium eingesetzt werden und wobei deren Massenanteile bis zu 25 % der Masse der Legierung betragen.

23. Verwendung von Verbundwerkstoffen gemäß Anspruch 1 zur Herstellung von Reibmaterialien.

24. Verwendung von Verbundwerkstoffen nach Anspruch 1 in Reibpaarungen mit Gegenkörpern, bei denen zumindest die Reibfläche aus hartem keramischem Material gebildet wird.

25. Verwendung von Verbundwerkstoffen nach Anspruch 1 in Reibpaarungen mit Gegenkörpern aus kohlenstoffaserverstärkter Verbundkeramik mit SiC-haltiger Matrix.

26. Verwendung von Verbundwerkstoffen nach Anspruch 1 als Bremsbelag in Reibpaarungen mit keramischen Bremsscheiben, die in der dem Bremsbelag zugewandten Zone einen Massenanteil von Siliciumcarbid von mindestens 60 % aufweisen.

## Claims

1. A composite which contains short fibers comprising carbon as reinforcing fibers, with the matrix of the composite comprising silicon carbide, silicon and copper and the mass fraction of copper in the composite being from 15% to 55%.

2. A composite as claimed in claim 1, wherein the copper in the matrix is present in isolated copper-containing regions which are completely surrounded by other phases, in particular phases comprising silicon carbide.

3. A composite as claimed in claim 2, wherein the volume fraction of the copper-containing regions in the composite is up to 25%, based on the volume of the composite.

4. A composite as claimed in claim 2 or 3, wherein the copper-containing phases comprise copper together with further metals which form mixed phases with copper and are selected from among zinc, tin, lead and aluminum, with these being able to be present individually or in admixture.

5. A composite as claimed in claim 4, wherein the mass fraction of these metals is up to 25%, based on the sum of the masses of copper and these metals.

6. A composite as claimed in claim 1, wherein the matrix further comprises carbides and/or silicides of the elements boron, titanium, zirconium, hafnium, vanadium, chromium, molybdenum, tungsten, iron, cobalt and nickel and/or these elements themselves.

7. A composite as claimed in claim 6, wherein the sum of the mass fractions of these elements, their carbides and silicides is up to 20% of the mass of the matrix.

8. A composite as claimed in claim 1 which comprises preformed particulate additives which form separate phases in the composite.

9. A composite as claimed in claim 8, wherein the particulate additives are selected from among silicon carbide, silicon nitride, titanium carbide, aluminum oxide, zirconium dioxide, silicon dioxide and zirconium silicate.

10. A composite as claimed in claim 8 or 9, wherein the mass fraction of the particulate additives is up to 15% of the mass of the matrix.

11. A process for producing composites as claimed in claim 1, which comprises the steps
- production of a porous carbon/carbon composite containing coated carbon fibers,
- melt infiltration of the porous C/C body with a metal melt comprising silicon and copper,
- reaction of at least part of the carbon of the C/C body with the silicon of the melt to form silicon carbide.

12. The process as claimed in claim 11, wherein the metal melt used comprises silicon and copper together with a mass fraction of from 0.1 to 5% of further metals.

13. The process as claimed in claim 11, wherein the C/C body prior to infiltration has a pore volume of at least 10% of the total volume of the body and a density of not more than 1.6 g/cm³.

14. The process as claimed in claim 11, wherein the C/C body prior to infiltration contains further particulate additives selected from among grains of hard material and sintered metal particles.

15. The process as claimed in claim 14, wherein carbides or oxides having melting points above the melting point of silicon are used in mass fractions of up to about 15% as grains of hard material.

16. The process as claimed in claim 11, wherein metallic copper or its alloys with mass fractions of up to 25% of other metals is/are introduced into the C/C body itself.

17. The process as claimed in claim 16, wherein the copper or its alloys are introduced in the form of powder or turnings.

18. A process for producing composites as claimed in claim 1, which comprises the steps
- production of a porous carbon/carbon composite containing coated carbon fibers and copper,
- melt infiltration of the porous C/C body with a silicon melt,
- reaction of at least part of the carbon of the C/C body with the silicon of the melt to form silicon carbide.

19. The process as claimed in claim 11, wherein the metal melt used is a Cu/Si melt which comprises additional carbide-forming elements selected from among boron, titanium, vanadium, chromium, molybdenum, tungsten, iron, cobalt and nickel and mixtures of two or more of these elements in mass fractions of up to about 20% of the melt.

20. The process as claimed in claim 11, wherein the metal melt is supplied via porous wicks made of carbon-containing material and/or via beds of metal particles.

21. The process as claimed in claim 11, wherein previously produced, finished alloys of Cu and Si are used for infiltration.

22. The process as claimed in claim 11, wherein a Cu alloy is used in admixture with silicon for the infiltration, with the metals zinc, tin, lead and aluminum being used as alloy constituents in mass fractions of up to 25% of the mass of the alloy.

23. The use of a composite as claimed in claim 1 for producing friction materials.

24. The use of a composite as claimed in claim 1 in friction pairings with counterbodies in which at least the friction surface is made of hard ceramic material.

25. The use of a composite as claimed in claim 1 in friction pairings with counterbodies comprising a composite ceramic reinforced with carbon fibers and having an SiC-containing matrix.

26. The use of a composite as claimed in claim 1 as brake lining in friction pairings with ceramic brake disks which have a mass fraction of silicon carbide of at least 60% in the zone facing the brake lining.

## Revendications

1. Matériau composite ayant des fibres courtes enrobées à base de carbone à titre de fibres de renforcement, où la matrice du matériau composite contient du carbure de silicium, du silicium et du cuivre, avec une teneur massique en cuivre dans le matériau composite de 15 % à 55 %.

2. Matériau composite selon la revendication 1, **caractérisé en ce que** le cuivre de la matrice est contenu dans des zones individuelles contenant du cuivre, ces zones individuelles contenant du cuivre étant totalement entourées d'autres phases, en particulier de phases contenant du carbure de silicium.

3. Matériau composite selon la revendication 2, **caractérisé en ce que** la proportion en volume des zones contenant du cuivre dans le matériau composite va jusqu'à 25 % par rapport au volume du matériau composite.

4. Matériau composite selon la revendication 2 ou 3, **caractérisé en ce que** les phases contenant du cuivre contiennent en plus du cuivre d'autres métaux qui forment avec le cuivre des phases mixtes, ces métaux étant choisis parmi le zinc, l'étain, le plomb et l'aluminium, ceux-ci pouvant être présents individuellement ou en mélange.

5. Matériau composite selon la revendication 4, **caractérisé en ce que** la proportion en masse desdits métaux, par rapport à la somme des masses du cuivre et de ces métaux, va jusqu'à 25 %.

6. Matériau composite selon la revendication 1, **caractérisé en ce que** la matrice contient elle-même des carbures et/ou des siliciures des éléments bore, titane, zirconium, hafnium, vanadium, chrome, molybdène, tungstène, fer, cobalt et nickel et/ou ces éléments eux-mêmes.

7. Matériau composite selon la revendication 6, **caractérisé en ce que** la somme des proportions en masse desdits éléments, de leurs carbures et siliciures, va jusqu'à 20 % de la masse de la matrice.

8. Matériau composite selon la revendication 1, **caractérisé en ce que** le matériau composite contient des additifs préformés, qui constituent des phases séparées dans le matériau composite.

9. Matériau composite selon la revendication 8, **caractérisé en ce que** les additifs sont choisis parmi le carbure de silicium, le nitrure de silicium, le carbure de titane, l'oxyde d'aluminium, le dioxyde de zirconium, le dioxyde de silicium et le silicate de zirconium.

10. Matériau composite selon la revendication 8 ou 9, **caractérisé en ce que** la proportion en masse des additifs va jusqu'à 15 % de la masse de la matrice.

11. Procédé pour la préparation des matériaux composites selon la revendication 1, comprenant les étapes
- préparation d'un corps composite carbone/carbone poreux contenant des fibres de carbone enrobées
- infiltration du corps C/C poreux par une masse fondue, effectuée avec une masse métallique fondue qui contient du silicium et du cuivre
- réaction d'au moins une partie du carbone du corps C/C avec le silicium de la masse fondue, avec formation de carbure de silicium.

12. Procédé selon la revendication 11, **caractérisé en ce que** la masse métallique fondue utilisée comporte, outre du silicium et du cuivre, d'autres métaux à une teneur de 0,1 à 5 % en masse.

13. Procédé selon la revendication 11, **caractérisé en ce que** le corps C/C présente avant l'infiltration une proportion en volume des pores, d'au moins 10 % par rapport au volume total du corps, et une densité de 1,6 g/cm³ au maximum.

14. Procédé selon la revendication 11, **caractérisé en ce que** préalablement à l'infiltration le corps C/C, contient initialement d'autres additifs choisis parmi des agents de friction à base de matériau à haute résistance mécanique, et des particules de métal fritté.

15. Procédé selon la revendication 14, **caractérisé en ce qu'**on utilise en tant qu'agents de friction à base de matériau à haute résistance mécanique des carbures ou des oxydes à points de fusion supérieurs à la température de fusion du silicium, en une proportion en masse allant jusqu'à 15 % environ.

16. Procédé selon la revendication 11, **caractérisé en ce qu'**on introduit initialement dans le corps C/C du cuivre métallique ou un de ses alliages, avec des teneurs en masse allant jusqu'à 25 % en autres métaux.

17. Procédé selon la revendication 16, **caractérisé en ce que** le cuivre ou ses alliages sont introduits sous forme de poudre ou de tournures.

18. Procédé pour la préparation des matériaux composites selon la revendication 1, comprenant les étapes suivantes :
- préparation d'un corps composite carbone/carbone poreux contenant des fibres de carbone enrobées et du cuivre,
- infiltration du corps C/C poreux avec une masse fondue de silicium,
- réaction d'au moins une partie du carbone du corps C/C avec le silicium de la masse fondue, avec formation de carbure de silicium.

19. Procédé selon la revendication 11, **caractérisé en ce qu'**on utilise à titre de masse métallique fondue des masses fondues de Cu/Si, d'autres éléments formant des carbures, choisis parmi le bore, le titane, le vanadium, le chrome, le molybdène, le tungstène, le fer, le cobalt et le nickel ainsi que des mélanges de deux ou plus de deux de ces éléments eux-mêmes, étant contenus dans la masse fondue en proportions en masse allant jusqu'à environ 20 % dans la masse fondue.

20. Procédé selon la revendication 11, **caractérisé en ce que** la masse fondue est introduite au moyen de mèches poreuses en matériau carboné et/ou au moyen de lits de particules métalliques.

21. Procédé selon la revendication 11, **caractérisé en ce que** pour l'infiltration on utilise des alliages préformés de Cu et Si.

22. Procédé selon la revendication 11, **caractérisé en ce qu'**on utilise pour l'infiltration un alliage de Cu en mélange avec du silicium, en utilisant comme composants d'alliage les métaux zinc, étain, plomb et aluminium et leurs proportions en masse allant jusqu'à 25 % de la masse de l'alliage.

23. Utilisation des matériaux composites selon la revendication 1, pour la production de matériaux de friction.

24. Utilisation des matériaux composites selon la revendication 1, dans des couples de frottement dans lesquels au moins la surface de frottement est constituée d'un matériau céramique dur.

25. Utilisation des matériaux composites selon la revendication 1, dans des couples de frottement à corps opposés à base de céramique composite renforcée aux fibres de carbone à matrice contenant du SiC.

26. Utilisation des matériaux composites selon la revendication 1, à titre de garniture de frein dans des couples de frottement à disques de frein céramiques qui comportent dans la zone faisant face à la garniture de frein une proportion en masse de carbure de silicium d'au moins 60 %.
